# EUROPÄISCHE PATENTSCHRIFT

(11) **EP 2 209 668 B1**
(45) Veröffentlichungstag und Bekanntmachung des Hinweises auf die Patenterteilung: **21.09.2011**
(21) Anmeldenummer: 08837012.7
(22) Anmeldetag: 26.09.2008
(51) Int. Cl.: B60N 2/42, B64D 25/06

(54) **SITZANORDNUNG FÜR EIN LAND-, SEE- ODER LUFTFAHRZEUG**
SEAT ASSEMBLY FOR A LAND VEHICLE, SEA VESSEL, OR AIRCRAFT
ENSEMBLE SIÈGE POUR UN VÉHICULE TERRESTRE, MARITIME OU AÉRIEN

(30) Priorität: 09.10.2007 DE 102007048486
(43) Veröffentlichungstag der Anmeldung: 28.07.2010
(73) Patentinhaber: Schroth Safety Products GmbH, 59757 Arnsberg (DE)
(72) Erfinder: SCHROTH, Carl, Jürgen, 59494 Soest (DE); HAYWARD, David, Suffolk CO10 0RT (GB)
(74) Vertreter: Griepenstroh, Jörg
(86) Internationale Anmeldenummer: PCT/DE2008/001586
(87) Internationale Veröffentlichungsnummer: WO 2009/046694

(56) Entgegenhaltungen:
- EP-A- 1 593 542
- WO-A-2007/031216
- DE-A1- 10 008 258
- DE-B3- 10 341 483
- US-A- 2 829 702
- US-A- 3 868 143

## Beschreibung

Die Erfindung betrifft eine Sitzanordnung für ein Land-, See- oder Luftfahrzeug gemäß den Merkmalen im Oberbegriff des Anspruchs 1.

Eine derartige Sitzanordnung zählt im Umfang der DE 103 41 483 B3 zum Stand der Technik. Sie umfasst zunächst ein aus einem Kraftfahrzeug bekanntes Gurtzeug aus Schultergurten und Beckengurten, die in einem zentralen Gurtschloss zusammensteckbar sind. Die Schultergurte und Beckengurte sind mit schräg verlaufenden Längsgurten verbunden, die an ihren unteren Enden über eine das Gesäß eines Benutzers unterfassende Gurtschlinge gekoppelt sind. Ferner befinden sich im unteren und oberen Bereich der Längsgurte zwei die Längsgurte verbindende Rückengurte. Die oberen Enden der Längsgurte sind mit Gurtaufrollern verbunden. Von den unteren Enden der Längsgurte aus erstrecken sich Haltegurte in der Bewegungsrichtung des Fahrzeugs schräg nach vorne und enden ebenfalls an Gurtaufrollern. Auch die das Gesäß eines Benutzers unterfassende Gurtschlinge ist über einen sich nach unten erstreckenden Haltegurt mit einem Gurtaufroller verbunden. Ferner erstreckt sich ein Haltegurt zwischen dem oberen Rückengurt nach hinten zu einem weiteren Gurtaufroller.

Alle Gurtaufroller sind über Steuerleitungen mit einer einen Schalthebel aufweisenden Schaltbox gekoppelt. Über den Schalthebel kann der Benutzer einen Freilauf mit freiem Gurtbandauszug und freiem Gurtbandeinzug, eine vollständige Sperrung aller Gurtaufroller sowohl gegen Gurtbandauszug als auch gegen Gurtbandeinzug sowie eine Sperrung der Gurtaufroller gegen Gurtbandauszug bei freiem Gurtbandeinzug einstellen.

Die bekannte Sitzanordnung ermöglicht also nur eine Höhenverstellbarkeit der das Gesäß unterfassenden Gurtschlinge. Auch erfordert sie neben dem eigentlichen Gurtzeug mindestens insgesamt sechs weitere Gurtbänder, um die Sitzanordnung einigermaßen fest in einem Fahrzeug zu verspannen. Die Gurtbänder bedürfen außerdem einer erheblichen Vorspannung, um einen Schaukeleffekt zu vermeiden. Dieser Sachverhalt steht jedoch einer individuellen, jederzeit verfügbaren benutzergerechten Einstellung entgegen. Außerdem sind die für die Sitzanordnung erforderlichen Gurtbänder relativ breit und verdecken in vielen Einsatzfällen die Sicht auf Bedien- und Sichtgeräte im jeweiligen Fahrzeug. Schließlich hat sich in der Praxis herausgestellt, dass die bekannte volltextile Sitzanordnung bei längerer Benutzung sehr unbequem ist und insbesondere zu Abschnürungen an den unteren Extremitäten eines Benutzers führen kann.

Aus der DE 43 03 719 A1 ist ein textiler Sicherheitssitz für Fahrzeuge, insbesondere in der Luft- und Schifffahrt, bekannt mit einer Sitzfläche, Rücken- und Seitenteilen sowie mit einem Sicherheitsgurt zur Sicherung der zu befördernden Insassen. Der Sicherheitssitz ist als eine den Körper des Insassen im Rücken und seitlich bis über Kopfhöhe umschließende und einen Einstieg aufweisende textile Hülle ausgebildet, wobei die Hülle oberhalb und unterhalb mittels an ihr angebrachter Befestigungsgurte zwischen am Boden und im Deckenbereich des Fahrzeugs vorgesehenen fahrzeugfesten Befestigungspunkten einspannbar ist.

Aus der EP 1 398 205 A2 ist ein Sicherheitssitz bekannt, der zwischen dem Boden und dem Deckenbereich eines Land-, Luft- oder Seefahrzeug mittels oberhalb oder unterhalb des Sitzes vorgesehener Spanngurte befestigbar ist. Das Sicherheitsgurtzeug besteht aus zwei Beckengurten sowie aus zwei von den Beckengurten abgehenden Schultergurten und einem in der Verlängerung der Schultergurte unter den Sitzteil zum Einstiegsbereich des Sitzteils geführten Aktivierungsmittel. Zwischen den Schultergurten und den vorderen Spanngurten ist jeweils ein Aufspanngurt nachgiebig angeordnet. Dadurch soll die Bewegungsfreiheit des Insassen vergrößert und insbesondere das An- und Ablegen des Sicherheitsgurtzeugs vereinfacht werden.

Eine weitere Sitzanordnung ist Gegenstand der US 7,293,818 B2. Es ist vorgesehen, in einem gepanzerten Fahrzeug einen Sitz mit einem festen Rahmen zu installieren, wobei der Rahmen vollkommen von dem Boden des Kraftfahrzeugs entkoppelt ist, damit für den Fall, wenn eine Landmine unterhalb des Fahrzeugs explodiert, die Kräfte vom Boden des Kraftfahrzeugs nicht unmittelbar auf den Sitz übertragen werden.

Eine weitere Ausführungsform eines hängenden Sitzes wird in der US 3,868,143 A offenbart. Es handelt sich um eine Sitzanordnung, die über mehrere Spanngurte sowohl am Boden als auch im Deckenbereich befestigt wird. Eine ähnliche Ausführungsform eines hängenden Sitzes wird in der DE 100 08 258 A1 beschrieben. In der US 2,829,702 A wird ebenfalls eine über Gurte aufgehängte Sitzanordnung beschrieben, wie auch in der WO 2007/031216 A1. Auch in der EP 1 593 942 A2 wird ein Sitz für ein gepanzertes Fahrzeug offenbart, bei welcher eine Sitzfläche über einen dehnbaren Gurt gehalten ist.

Der Erfindung liegt - ausgehend vom Stand der Technik - die Aufgabe zugrunde, eine Sitzanordnung für Land-, Wasser- oder Luftfahrzeuge zu schaffen, mittels derer ein Benutzer gegen Vibrationen sowie vertikal nach oben gerichtete Beschleunigungskräfte und Fahrzeugbodenverwerfungen, zum Beispiel durch Minenansprengungen, bei großzügiger Einstellbarkeit zur Anpassung an unterschiedliche Größen des Benutzers geschützt werden kann.

Die Lösung dieser Aufgabe besteht nach der Erfindung in den Merkmalen des Anspruchs 1.

Erfindungsgemäß gelangt eine stabile Plattform zum Einsatz, die selber direkt als Sitz gestaltet ist oder auf der ein Sitz angeordnet werden kann. Die Plattform ist entlang von Seilen verlagerbar sowie in der jeweiligen Position an den Seilen lagefixierbar. Die Seile ihrerseits sind mit ihren oberen und unteren Endabschnitten an geeigneten Strukturteilen des jeweiligen Fahrzeugs verankert. Ein weiteres wesentliches Merkmal besteht darin, dass die oberhalb und unterhalb der Plattform liegenden Seilabschnitte der Seile derart zwischen der Plattform und den Strukturteilen verlaufen, dass sie entweder zur vertikalen Mittelachse der Plattform weisen oder von dieser weg gerichtet sind.

Von Bedeutung ist es im Rahmen der Erfindung, dass die Plattform mittels der Seile im Raum eines Fahrzeugs so lagefixiert und verspannt werden kann, dass ein Benutzer nicht nur gegen Vibrationen, sondern insbesondere auch gegen vertikal nach oben gerichtete Beschleunigungskräfte und gegen Fahrzeugbodenverwerfungen aufgrund von Minenansprengungen, vorzugsweise in Militärfahrzeugen (Panzer), geschützt ist. Dennoch gewährt die Sitzanordnung eine volle Einstellbarkeit zur Bedienanpassung an die unterschiedlichen Größen der Benutzer.

Die lagefixierte räumliche Positionierung der Plattform kann über die Abspannwinkel der oberhalb und unterhalb der Plattform verlaufenden Seilabschnitte relativ zur Plattform benutzergerecht eingestellt werden. Wichtig ist hierbei nur, dass alle Seilabschnitte entweder gleichmäßig von der vertikalen Mittelachse der Plattform weg weisen oder auf die Mittelachse zu gerichtet sind. Dadurch bilden die Seilabschnitte jeweils die Kanten einer fiktiven Pyramide, welche gleichschenklig oder ungleichschenklig sein kann. Durch unterschiedliche Spannung an, nicht unter gleichem Winkel zur Plattform verlaufenden Seile, können die nach innen gerichteten Vektoren dennoch durch einen definierten Punkt der Plattform verlaufen und somit die gewünschte Lage der Plattform im Raum erwirken. Dadurch kann die Erfindung auch bei Fahrzeugen zum Einsatz kommen, bei denen keine symmetrische Anordnung der Anschlagpunkte gegeben ist.

Erfindungsgemäß sind die Seile über mindestens eine Höheneinstellvorrichtung für die Plattform geführt. Mittels der Höheneinstellvorrichtung kann demnach die Plattform sowohl parallel nach oben und nach unten verlagert als auch in ihrer Neigung verändert werden.

Erfindungsgemäß ist die Höheneinstellvorrichtung in die Plattform eingegliedert. Gemäß einer nicht beanspruchten Ausführung kann die Höheneinstellvorrichtung aber auch unterhalb der Plattform vorgesehen ein. Insbesondere bei Verwendung von zwei Höheneinstellvorrichtungen an den in Bewegungsrichtung des Fahrzeugs vorderen und hinteren Seilen ist eine Neigungsveränderung der Plattform problemlos möglich.

Eine vorteilhafte Weiterbildung des erfindungsgemäßen Grundgedankens wird im Anspruch 2 gesehen. Dadurch ist im Längenverlauf eines Seils mindestens mittelbar ein Energiewandler vorgesehen. Alle Energiewandler haben vorzugsweise die Aufgabe, bei zum Beispiel einer Minenansprengung unter Wandlung von Energie ein kontrolliertes Abwärtsgleiten der Plattform zu gewährleisten. Der Energiewandler kann zum Beispiel als Drehstabwandler, Reibwandler oder andersartig ausgebildeter Metallumwandler ausgeführt sein.

In diesem Zusammenhang ist es nach Anspruch 3 zweckmäßig, dass die Energiewandler unter Einfluss von in den Sitz oder in die Verankerungspunkte der Seile an den Strukturteilen integrierte, auf Belastung reagierende Sensoren gestellt sind. Solche Sensoren können die Masse des jeweiligen Benutzers ermitteln und die in ihrem Lastniveau einstellbaren Energiewandler so ansteuern, dass stets eine optimale Energiewandlung erfolgt, welche sich aus der räumlichen Begrenzung im Fahrzeug errechnet.

Gemäß Anspruch 4 ist die Höheneinstellvorrichtung von Hand oder mittels eines elektrischen bzw. hydraulischen Antriebs betätigbar. Eine manuelle Betätigung kann zum Beispiel über einen Kurbeltrieb erfolgen.

Wenn entsprechend Anspruch 5 ein Energiewandler in eine Höheneinstellvorrichtung integriert ist, kann die Höheneinstellvorrichtung bevorzugt einen Kurbeltrieb aufweisen. Der Kurbeltrieb besitzt eine nicht verdrehbar angeordnete Zahnscheibe und wird durch eine Blockiervorrichtung in einer jeweils gewünschten Position gegenüber der Plattform fixiert. Die Seile umschlingen jeweils eine Welle der Höheneinstellvorrichtung. Die Welle ist im Umschlingungsbereich der Seile entweder durch eine spezielle Ausformung oder durch eine die Reibung erhöhende Oberfläche so ausgebildet, dass ein einwandfreier Kraftschluss zwischen den Seilen und der Welle hergestellt wird. Der Energiewandler ist dann zwischen die Blockiervorrichtung und den Umschlingungsbereich der Seile eingegliedert.

Um die jeweilige Höhenlage der Plattform zu fixieren sind nach Anspruch 6 den Seilen an der Plattform angeordnete Klemm-/Lösevorrichtungen zugeordnet. Dazu befinden sich auf einer Seite eines Seils ein Gegenlager und auf der anderen Seite Klemmglieder. Die Klemmglieder sind durch eine Löseeinheit von den Seilen abhebbar, wobei die Löseeinheit so gestaltet ist, dass eine Klemmwirkung nur in der Richtung aufgehoben wird, in welche die Plattform an den Seilen entlang verlagert werden soll. Die Klemm/Lösevorrichtung erlaubt es einem Benutzer sehr schnell aus einer höheren in eine tiefere Sitzposition abzutauchen, wenn dieses aus Sicherheitsgründen, zum Beispiel von einer Ausblickposition in einem Panzer in den schützenden Innenraum, erforderlich sein sollte.

Zur Stützung des Becken- und Nierenbereichs eines Benutzers und zur Schaffung einer großflächigen Rückenlehne sind gemäß den Merkmalen des Anspruchs 7 zwischen den oberhalb der Plattform liegenden, in Bewegungsrichtung des Fahrzeugs rückwärtigen Seilabschnitten textile Becken- und Rückenverspannungen vorgesehen. Hierbei kann die Rückenverspannung aus einem breiten Tuch bestehen, während für das Becken vorzugsweise ein oder zwei schmalere Gurtbänder zwischen den Seilabschnitten angeordnet sind.

Es ist nach Anspruch 8 aber auch denkbar, dass zwischen den oberhalb der Plattform liegenden, in Bewegungsrichtung des Fahrzeugs rückwärtigen Seilabschnitten ein an die Rückenpartie eines Benutzers angepasstes Formteil vorgesehen ist. Dieses Formteil hat dann eine ergonomische und/oder sicherheitsfördernde schalenartige Ausgestaltung.

Des Weiteren ist es entsprechend Anspruch 9 zweckmäßig, dass zwischen den oberhalb der Plattform vorgesehenen, in Bewegungsrichtung des Fahrzeugs hintereinander liegenden seitlichen Seilabschnitten textile Becken- und Schulterverspannungen angeordnet sind. Diese Verspannungen dienen der seitlichen Stützung eines Benutzers im Becken- und Schulterbereich.

In diesem Zusammenhang ist es dann nach Anspruch 10 von Vorteil, dass die Schulterverspannungen netzartig ausgebildet sind. Derartige Verspannungen erlauben eine seitwärts gerichtete Sicht des Benutzers und auch eine bessere Kommunikation mit weiteren Fahrzeuginsassen.

Ist gemäß den Merkmalen des Anspruchs 11 ein in Bewegungsrichtung des Fahrzeugs verlagerbarer und in der jeweiligen Position festlegbarer, insbesondere ergonomisch ausgebildeter, Sitz auf der Plattform vorgesehen, so kann dieser über Schienen mit der Plattform verbunden und entlang der Schienen verlagerbar sein.

Nach Anspruch 12 ist es möglich, dass ein solcher Sitz relativ zur Plattform in der Höhe verstellbar ist.

Ferner ist es vorstellbar, dass entsprechend Anspruch 13 der Sitz auf der Plattform zumindest begrenzt quer verstellbar ist.

Gemäß Anspruch 14 ist eine Rückenlehne des Sitzes in der Neigung verstellbar, so dass der Komfort für den Benutzer erhöht wird.

Um auch den Fußbereich eines Benutzers adäquat zu schützen, ist entsprechend den Merkmalen des Anspruchs 15 vorgesehen, dass in Bewegungsrichtung des Fahrzeugs eine Fußstütze vor der Plattform angeordnet ist, die gegebenenfalls höhen- und/oder neigungsverstellbar von an Strukturteilen des Fahrzeugs verankerten Seilen getragen ist. Die Fußstütze kann ergonomisch gestaltet sein. Sie kann aber auch nur aus einer einfachen Plattform bestehen.

Schließlich erlauben es die Merkmale des Anspruchs 16 noch, dass der Sitz mindestens mittelbar mit Rückhaltegurten ausgestattet ist. Hierbei kann es sich um ein sitzintegriertes Rückhaltesystem handeln oder es können fahrzeugseitig vorgesehene Rückhaltesysteme genutzt werden.

Die Erfindung ist nachfolgend anhand von in den Zeichnungen dargestellten Ausführungsbeispielen näher erläutert.

Es zeigen:
- Figur 1: in schematischer Perspektive eine Sitzanordnung für ein Land-, See- oder Luftfahrzeug;
- Figur 2: ebenfalls in schematischer Perspektive eine weitere Ausführungsform einer Sitzanordnung für ein Land-, See- oder Luftfahrzeug;
- Figur 3: nochmals in schematischer Perspektive eine Höheneinstellvorrichtung für die Sitzanordnungen gemäß den Figuren 1 und 2;
- Figur 4: in schematischer Perspektive, teilweise im Schnitt eine weitere Ausführungsform einer Höheneinstellvorrichtung für die Sitzanordnungen der Figuren 1 und 2;
- Figur 5: in vergrößertem Maßstab in der Ansicht das Detail V der Höheneinstellvorrichtung der Figur 4 zusammen mit einem Energiewandler;
- Figur 6: im Schema, teilweise im Schnitt, eine Klemm-/Lösevorrichtung für die Sitzanordnungen der Figuren 1 und 2;
- Figur 7: in schematischer Perspektive eine dritte Ausführungsform einer Sitzanordnung für ein Land-, See- oder Luftfahrzeug;
- Figur 8: in schematischer Perspektive eine vierte Ausführungsform einer Sitzanordnung für ein Land-, See- oder Luftfahrzeug;
- Figur 9: in der Seitenansicht im Schema eine Fußstütze für eine Sitzanordnung gemäß den Figuren 1, 2, 7 oder 8 und
- Figur 10: in schematischer Perspektive eine weitere Ausführungsform einer Fußstütze für die Sitzanordnungen der Figuren 1, 2, 7 oder 8.

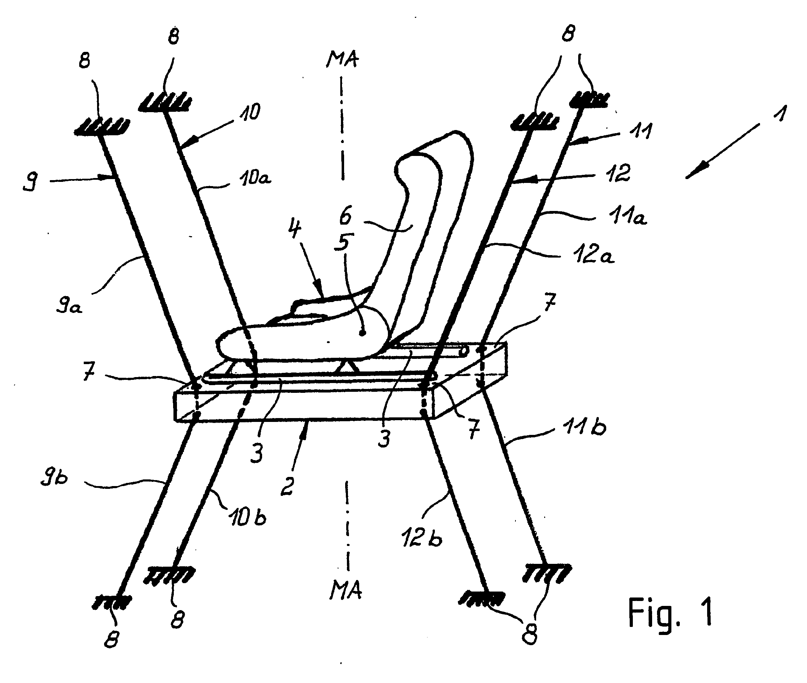

In der Figur 1 ist mit 1 eine Sitzanordnung für ein nicht näher veranschaulichtes Land-, See- oder Luftfahrzeug bezeichnet. Bei einem solchen Fahrzeug kann es sich beispielsweise um ein militärisches Fahrzeug wie einen Panzer handeln.

Die Sitzanordnung 1 umfasst eine stabile rechteckige Plattform 2. Auf der Plattform 2 sind Schienen 3 vorgesehen, an denen entlang ein Sitz 4 für einen nicht näher dargestellten Benutzer verlagerbar und in der jeweiligen Position fixierbar ist. Der Sitz 4 ist ergonomisch gestaltet und weist eine um eine Achse 5 in der Neigung veränderbare Rückenlehne 6 auf.

Die Plattform 2 ist über ihre Eckbereiche 7 entlang von an Strukturteilen 8 des Fahrzeugs verankerten Seilen 9, 10, 11, 12 verlagerbar sowie in der jeweiligen Position in nachstehend noch näher beschriebener Weise an den Seilen 9 - 12 lagefixierbar. Beim Ausführungsbeispiel der Figur 1 verlaufen die oberhalb und unterhalb der Plattform 2 liegenden Seilabschnitte 9a - 12a beziehungsweise 9b - 12b derart, dass sie - ausgehend von der Plattform 2 - von der vertikalen. Mittelachse MA der Plattform 2 weg gerichtet sind. Wie dargestellt, verlaufen die oberhalb und unterhalb der Plattform 2 liegenden Seilabschnitte 9a - 12a, 9b - 12b parallel zueinander. Sie können aber auch - von der Plattform 2 ausgehend - so angeordnet sein, dass einerseits die Seilabschnitte 9a - 12a oberhalb der Plattform 2 und andererseits die Seilabschnitte 9b - 12b unterhalb der Plattform 2 gewissermaßen die Längskanten einer fiktiven Pyramide bilden.

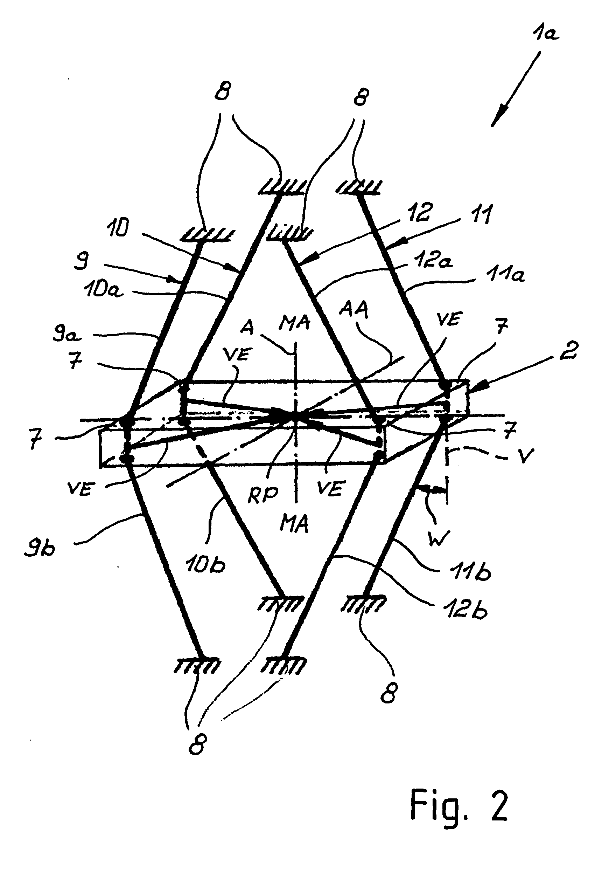

Auch bei der Sitzanordnung 1a der Figur 2 ist eine stabile rechteckige Plattform 2 vorgesehen, die über ihre Eckbereiche 7 entlang von an Strukturteilen 8 des Fahrzeugs verankerten Seilen 9 - 12 verlagerbar sowie in der jeweiligen Position an den Seilen 9 - 12 lagefixierbar ist. Es ist jedoch zu erkennen, dass nunmehr die zwischen der Plattform 2 und den Strukturteilen 8 verlaufenden Seilabschnitte 9a - 12a beziehungsweise 9b - 12b zur vertikalen Mittelachse MA der Plattform 2 gerichtet sind. Diese Verspannung erlaubt mittels der Abspannwinkel W zwischen den Seilabschnitten 9a - 12a, 9b - 12b und der Vertikalen V zur Ebene der Plattform 2 sowie der an den Seilabschnitten 9a - 12a, 9b - 12b aufgebrachten Kräfte, deren Vektoren VE sich in einem Referenzpunkt RP schneiden, die Plattform 2 im Raum zu positionieren und zu fixieren. Der Referenzpunkt RP ergibt sich aus den Schnittpunkten der Achsen A und AA der Plattform 2. Jeder Seilabschnitt 9a - 12a, 9b - 12b kann einen anderen Abspannwinkel W zur Plattform 2 einnehmen, solange die grundsätzliche Richtung aller Seilabschnitte 9a - 12a, 9b - 12b eingehalten wird.

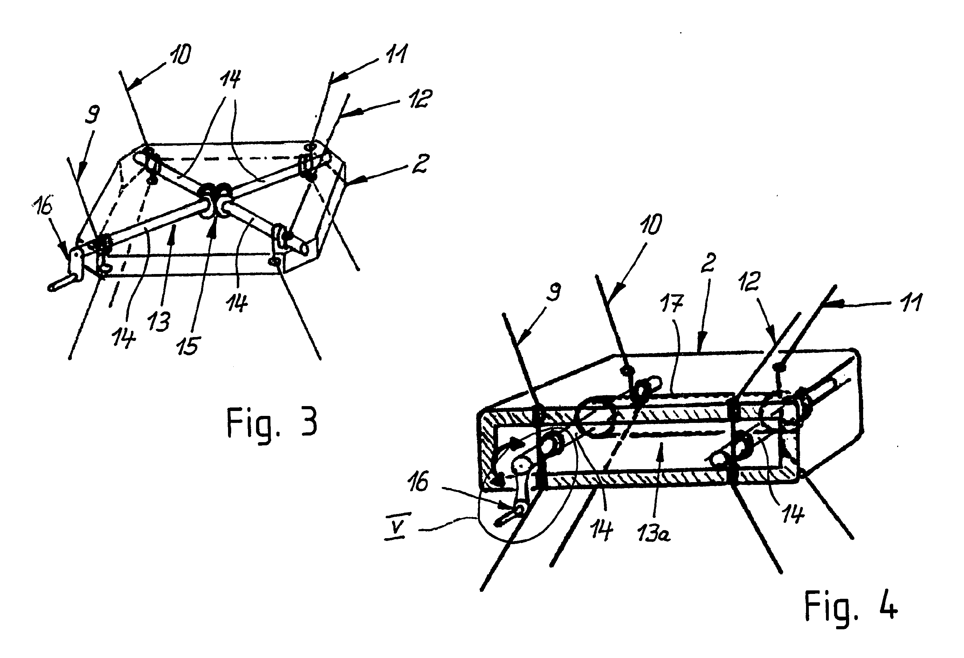

Die im Schema in der Figur 3 gezeigte Ausführungsform einer Plattform 2 zeigt eine Höheneinstellvorrichtung 13, mit deren Hilfe die Plattform 2 parallel zu sich nach oben oder unten verlagert werden kann. Sie umfasst vier in der Plattform 2 kreuzweise angeordnete und drehbar gelagerte Wellen 14, die an ihren inneren Enden über ein Kegelradgetriebe 15 gekoppelt sind. Am äußeren Ende einer Welle 14 ist ein Kurbeltrieb 16 vorgesehen. Die Seile 9 - 12 sind in der Nähe der äußeren Enden der Wellen 14 ein- oder mehrfach um die Wellen 14 geschlungen. Beim Drehen des Kurbeltriebs 16 rotieren alle Wellen 14 gleichmäßig, so dass dadurch die Plattform 2 an den Seilen 9 - 12 entlang verlagert wird.

Bei der Ausführungsform einer Höheneinstellvorrichtung 13a gemäß Figur 4 sind in einer Plattform 2 zwei Wellen 14 parallel zueinander drehbar gelagert. Die beiden Wellen 14 sind über eine Transmission 17 miteinander verbunden. An dem aus der Plattform 2 herausgeführten Ende einer Welle 14 ist ein Kurbeltrieb 16 angeordnet. Die Seile 9 - 12 sind vertikal durch die Plattform 2 geführt und um die Endbereiche der Wellen 14 geschlungen. Wenn der Kurbeltrieb 16 gedreht wird, kann die Plattform 2 parallel zu sich nach oben oder unten verlagert werden.

Diese Ausführungsform kann aber auch dahingehend abgewandelt werden, dass keine Transmission 17 vorgesehen ist, dafür aber beide Wellen 14 mit einem Kurbeltrieb 16 versehen werden. Bei dieser Ausführungsform kann dann durch entsprechende Betätigung der beiden Kurbeltriebe 16 die Plattform 2 in der Neigung verändert werden, so dass die Sitzneigung an den jeweiligen Benutzer angepasst werden kann.

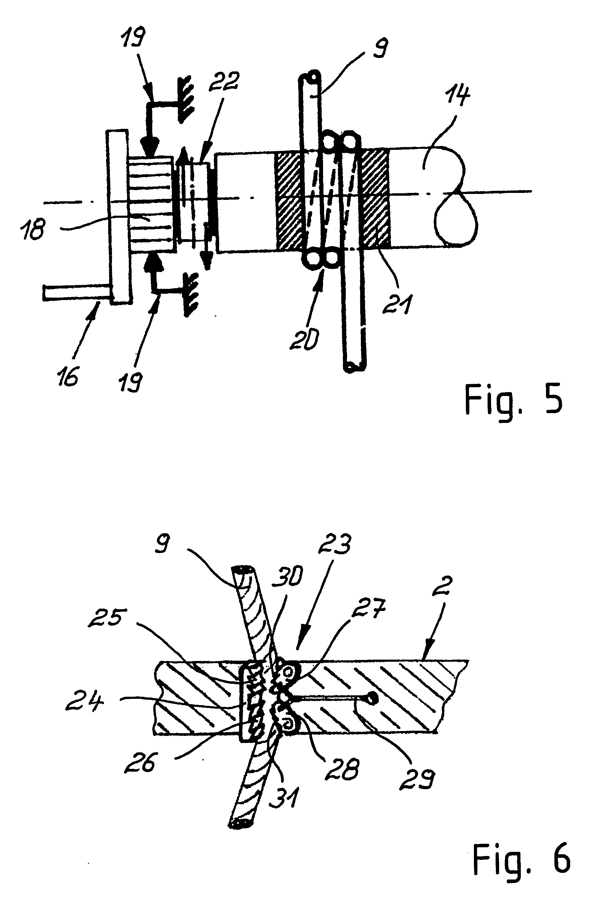

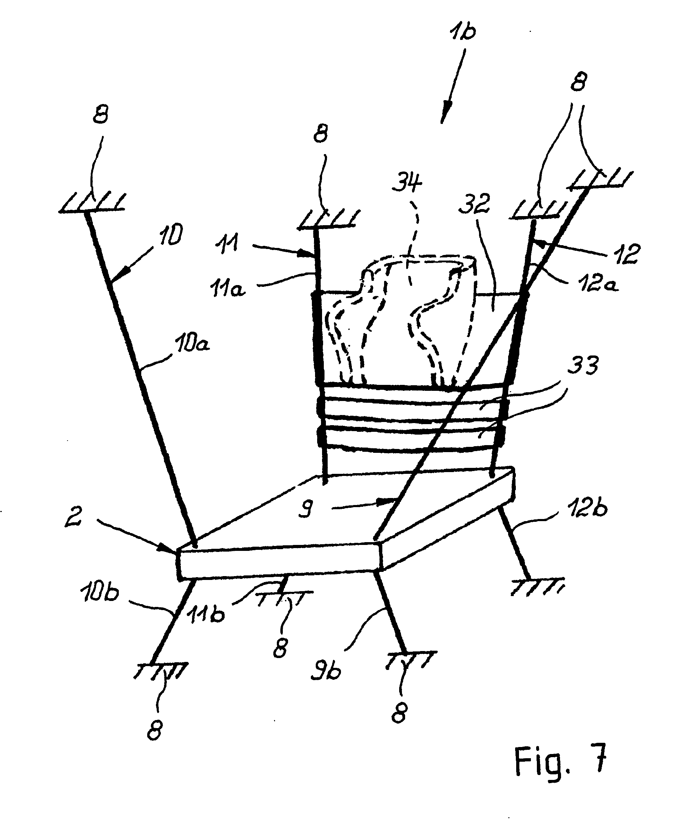

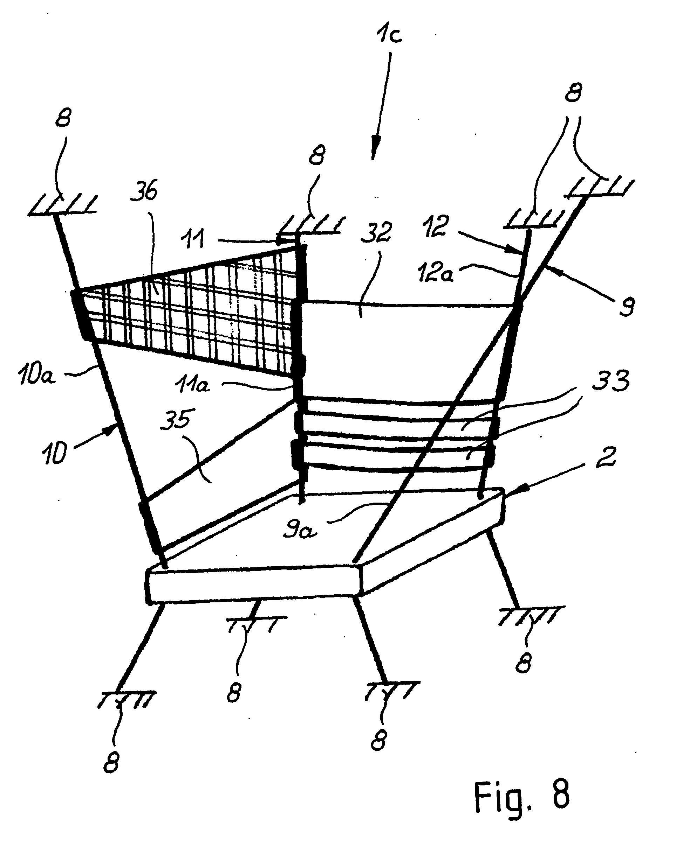

Die Figur 5 veranschaulicht im Schema den Bereich V der Figur 4. Es ist zu erkennen, dass der Kurbeltrieb 16 mit einer Zahnscheibe 18 fest verbunden ist. Die Zahnscheibe 18 kann mittels einer nicht näher dargestellten Blockiervorrichtung 19 in einer gewünschten Position gegenüber einer Plattform gemäß den Figuren 1 oder 2 bzw. - wie noch erläutert - den Figuren 7 oder 8 fixiert werden. Das Seil, zum Beispiel das Seil 9, umschlingt hierbei die Welle 14. Im Umschlingungsbereich 20 ist die Welle 14 mit einer den Reibungswiderstand erhöhenden Oberfläche 21 versehen, so dass der Kraftfluss zwischen dem Seil 9 und der Welle 14 verbessert wird. Zwischen der Welle 14 und der Zahnscheibe 18 ist ein nicht näher dargestellter Energiewandler 22 angebracht, der zum Beispiel als Drehstabwandler ausgebildet sein kann.

Die Ausführungsform gemäß Figur 5 kann natürlich auch bei der Ausführungsform der Figur 3 eingesetzt werden.

Aus der Figur 6 ist das Prinzip einer Klemm-/Lösevorrichtung 23 für eine Plattform 2 erkennbar. Auf der einen Seite eines Seils, zum Beispiel das Seil 9, ist ein verzahntes Gegenlager 24 erkennbar. Das Gegenlager 24 weist im oberen Bereich nach unten gerichtete Zähne 25 und im unteren Bereich nach obern weisende Zähne 26 auf. Auf der anderen Seite des Seils 9 befinden sich zwei schwenkbare verzahnte Klemmglieder 27, 28, die mit einer Löseeinheit 29 gekoppelt sind. Die Löseeinheit 29 ist derart ausgebildet, dass mit ihr die Klemmglieder 27, 28 einzeln vom Seil 9 gelöst werden können. Soll beispielsweise die Plattform 2 nach oben verlagert werden, so wird das obere Klemmglied 27 vom Seil 9 gelöst, während bei einer Verlagerung der Plattform 2 nach unten das untere Klemmglied 28 vom Seil 9 gelöst wird. Es ist ferner ersichtlich, dass entsprechend der jeweiligen Verlagerungsrichtung die Zähne 25, 26 an dem Gegenlager 24 und die Zähne 30, 31 an den Klemmgliedern 27, 28 gleich ausgerichtet sind.

Die aus der Figur 7 erkennbare Sitzanordnung 1b zeigt im Schema eine direkt als Sitz ausgebildete Plattform 2, die entlang von an Strukturteilen 8 des Fahrzeugs verankerten Seilen 9 - 12 verlagerbar sowie in der vorstehend bereits beschriebenen Weise in der jeweiligen Position an den Seilen 9 - 12 lagefixierbar ist. Die Seilabschnitte 9a - 12a und 9b - 12b oberhalb und unterhalb der Plattform 2 sind von der Plattform 2 weg gerichtet.

Zwischen den oberhalb der Plattform 2 liegenden, in Bewegungsrichtung des Fahrzeugs rückwärtigen Seilabschnitten 11a, 12a ist im Rückenbereich eine großflächige textile Rückenverspannung 32 vorgesehen. Unterhalb dieser Rückenverspannung 32 befinden sich zwei demgegenüber schmalere gurtartige Beckenverspannungen 33 zur Stützung des Becken- und Nierenbereichs eines Benutzers.

In unterbrochener Linienführung ist in der Figur 7 noch dargestellt, dass statt der Rücken- und Beckenverspannungen 32, 33 zwischen den oberhalb der Plattform 2 liegenden, in Bewegungsrichtung des Fahrzeugs rückwärtigen Seilabschnitten 11 a, 12a ein an die Rückenpartie eines Benutzers angepasstes, schalenartiges Formteil 34 in ergonomischer und/oder sicherheitsfördernder Ausführung vorgesehen sein kann.

Die Sitzanordnung 1c gemäß Figur 8 entspricht zunächst der Sitzanordnung 1b gemäß Figur 7, was die Plattform 2, die Führung der Seile 9 - 12 sowie die Rücken- und Beckenverspannungen 32, 33 anlangt.

Zusätzlich ist aber noch zu erkennen, dass zur lateralen Stützung eines Benutzers zwischen den oberhalb der Plattform 2 vorgesehenen, in Bewegungsrichtung des Fahrzeugs hintereinander liegenden, seitlichen Seilabschnitten 10a, 11a textile Becken- und Schulterverspannungen 35, 36 angeordnet sind. Diese dienen der Stützung des Beckenbereichs sowie des Schulter- und Kopfbereichs. Die Schulterverspannung 36 ist netzartig ausgebildet und erlaubt eine seitwärts gerichtete Sicht sowie eine erleichterte Kommunikation mit anderen Fahrzeuginsassen. Dargestellt ist in der Figur 8 nur jeweils eine Becken- und Schulterverspannung 35, 36. Selbstverständlich kann auch auf der anderen Seite eine solche Becken- und Schulterverspannung 35, 36 zwischen den oberen Seilabschnitten 9a und 12a vorgesehen sein.

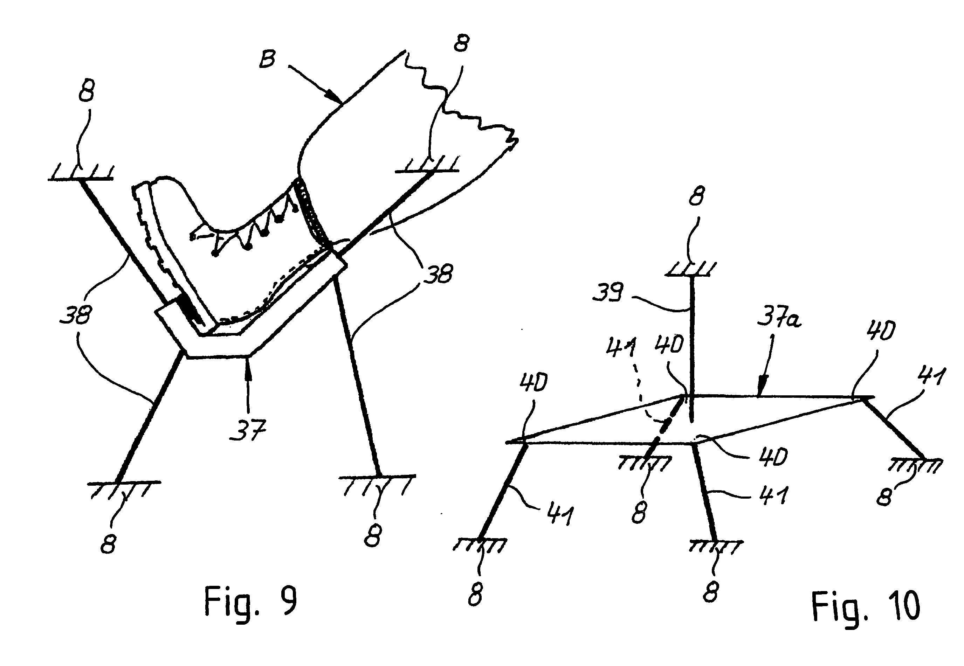

In der Figur 9 ist in prinzipieller Seitenansicht eine in Bewegungsrichtung eines Fahrzeugs vor einer Plattform 2 angeordnete Fußstütze 37 für einen Benutzer B veranschaulicht. Die Fußstütze 37 ist an den Fußbereich des Benutzers B angepasst und wird von an Strukturteilen 8 des Fahrzeugs verankerten Seilen 38 getragen. Hierbei ist es vorstellbar, dass auch die Fußstütze 37 höhen- und/oder neigungsverstellbar ist. Die Seile 38 können sich entsprechend den Ausführungsformen der Figuren 1, 7 oder 8 im Raum erstrecken.

In der Figur 10 ist eine plattformartige Fußstütze 37a dargestellt. Diese Fußstütze 37a ist über ein nach oben weisendes vertikales Seil 39 an einem Strukturteil 8 eines Fahrzeugs verankert und über weitere an die Eckbereiche 40 angeschlagene, nach unten weisende vier Seile 41 mit Strukturteilen 8 des Fahrzeugs verankert.

Denkbar sind bei den Ausführungsformen der Figuren 9 und 10 integrierte Höheneinstellvorrichtungen 13, 13a, wie sie anhand der Figuren 3 bis 6 erläutert worden sind.

### Bezugszeichen:

- 1 -: Sitzanordnung
1a - Sitzanordnung
1b - Sitzanordnung
1 c - Sitzanordnung
- 2 -: Plattform v. 1,1a,1b,1c
- 3 -: Schienen auf 2
- 4 -: Sitz auf 2
- 5 -: Achse f. 6
- 6 -: Rückenlehne
- 7 -: Eckbereiche v. 2
- 8 -: Strukturteile
- 9 -: Seil
9a - oberer Seilabschnitt v. 9
9b - unterer Seilabschnitt v. 9
- 10 -: Seil
10a - oberer Seilabschnitt v. 10
10b - unterer Seilabschnitt v. 10
- 11 -: Seil
11 a - oberer Seilabschnitt v. 11
11 b - unterer Seilabschnitt v. 11
- 12 -: Seil
12a - oberer Seilabschnitt v. 12
12b - unterer Seilabschnitt v. 12
- 13 -: Höheneinstellvorrichtung
13a - Höheneinstellvorrichtung
- 14 -: Wellen
- 15 -: Kegelradgetriebe
- 16 -: Kurbeltrieb
- 17 -: Transmission
- 18 -: Zahnscheibe
- 19 -: Blockiervorrichtung
- 20 -: Umschlingungsbereich v. 14
- 21 -: Oberfläche v. 14
- 22 -: Energiewandler
- 23 -: Klemm/Lösevorrichtung
- 24 -: Gegenlager
- 25 -: Zähne an 24
- 26 -: Zähne an 24
- 27 -: Klemmglied
- 28 -: Klemmglied
- 29 -: Löseeinheit
- 30 -: Zähne an 27
- 31 -: Zähne an 28
- 32 -: Rückenverspannung
- 33 -: Beckenverspannung
- 34 -: Formteil
- 35 -: Beckenverspannung
- 36 -: Schulterverspannung
- 37 -: Fußstütze
37a - Fußstütze
- 38 -: Seile f. 37
- 39 -: Eckbereiche v. 37a
- 40 -: Seile f. 37a

- A -: Achse v. 2
- AA -: Achse v. 2
- B -: Benutzer
- MA -: Mittelachse v. 2
- RP -: Referenzpunkt
- V -: Vertikale auf 2
- VE -: Vektoren
- W -: Abspannwinkel

## Patentansprüche

1. Sitzanordnung für ein Land-, See- oder Luftfahrzeug, die ein das Gesäß eines Benutzers unterfangenden, vertikal verstellbaren Sitz (4) sowie mehrere zwischen dem Sitz (4) und Strukturteilen (8) des Fahrzeugs angeordnete flexible Verbindungen (9 - 12) aufweist, wobei der Sitz (4) mindestens mittelbar einen Bestandteil einer Plattform (2) bildet, die entlang von an den Strukturteilen (8) des Fahrzeugs verankerbaren Verbindungen in Form von Seilen (9 - 12) verlagerbar sowie in der jeweiligen Position an den Seilen (9 - 12) lagefixierbar ist, wobei die oberhalb und unterhalb der Plattform (2) liegenden Seilabschnitte (9a - 12a, 9b - 12b) der Seile (9 - 12) derart zwischen der Plattform (2) und den Strukturteilen (8) verlaufen, dass sie entweder zur vertikalen Mittelachse (MA) der Plattform (2) weisen oder von dieser weg gerichtet sind, **dadurch gekennzeichnet, dass** die Seile (9 - 12) über mindestens eine Höheneinstellvorrichtung (13, 13a) für die Plattform (2) geführt sind, wobei die Höheneinstellvorrichtung (13, 13a) in die Plattform (2) eingegliedert ist.

2. Sitzanordnung nach Anspruch **dadurch gekennzeichnet, dass** im Längenverlauf der Seile (9 - 12) mindestens mittelbar Energiewandler (22) vorgesehen sind.

3. Sitzanordnung nach Anspruch 2, **dadurch gekennzeichnet, dass** die Energiewandler (22) unter den Einfluss von in den Sitz (4) oder in die Verankerungspunkte der Seile (9-12) an den Strukturteilen (8) integrierte, auf Belastungen reagierende Sensoren gestellt sind.

4. Sitzanordnung nach Anspruch 1, **dadurch gekennzeichnet, dass** die Höheneinstellvorrichtung (13, 13a) von Hand oder mittels eines elektrischen beziehungsweise hydraulischen Antriebs betätigbar ist.

5. Sitzanordnung nach einem der Ansprüche 2 bis 4, **dadurch gekennzeichnet, dass** ein Energiewandler (22) in eine Höheneinstellvorrichtung (13, 13a) integriert ist.

6. Sitzanordnung nach einem der Ansprüche 1 bis 5, **dadurch gekennzeichnet, dass** den Seilen (9 - 12) an der Plattform (2) angeordnete Klemm/Lösevorrichtungen (23) zugeordnet sind.

7. Sitzanordnung nach einem der Ansprüche 1 bis 6, **dadurch gekennzeichnet, dass** zwischen den oberhalb der Plattform (2) liegenden, in Bewegungsrichtung des Fahrzeugs rückwärtigen Seilabschnitten (11a, 12a) textile Rücken- und Beckenverspannungen (32, 33) vorgesehen sind.

8. Sitzanordnung nach einem der Ansprüche 1 bis 6, **dadurch gekennzeichnet, dass** zwischen den oberhalb der Plattform (2) liegenden, in Bewegungsrichtung des Fahrzeugs rückwärtigen Seilabschnitten (11a, 12a) ein an die Rückenpartie eines Benutzers angepasstes Formteil (34) vorgesehen ist.

9. Sitzanordnung nach einem der Ansprüche 1 bis 8, **dadurch gekennzeichnet, dass** zwischen den oberhalb der Plattform (2) vorgesehenen, in Bewegungsrichtung des Fahrzeugs hintereinander liegenden seitlichen Seilabschnitten (9a, 12a bzw. 10a, 11a) textile Becken- und Schulterverspannungen (35, 36) angeordnet sind.

10. Sitzanordnung nach Anspruch 9, **dadurch gekennzeichnet, dass** die Schulterverspannungen (36) netzartig ausgebildet sind.

11. Sitzanordnung nach einem der Ansprüche 1 bis 6, **dadurch gekennzeichnet, dass** auf der Plattform (2) ein in Bewegungsrichtung des Fahrzeugs verlagerbarer und in der jeweiligen Position festlegbarer, ergonomisch ausgebildeter Sitz (4) vorgesehen ist.

12. Sitzanordnung nach Anspruch 11, **dadurch gekennzeichnet, dass** der Sitz (4) in der Höhe verstellbar ist.

13. Sitzanordnung nach Anspruch 11 oder 12, **dadurch gekennzeichnet, dass** der Sitz (4) auf der Plattform (2) quer verstellbar ist.

14. Sitzanordnung nach einem der Ansprüche 11 bis 13, **dadurch gekennzeichnet, dass** eine Rückenlehne (6) des Sitzes (4) in der Neigung verstellbar ist.

15. Sitzanordnung nach einem der Ansprüche 1 bis 14, **dadurch gekennzeichnet, dass** in Bewegungsrichtung des Fahrzeugs eine Fußstütze (37, 37a) vor der Plattform (2) angeordnet ist, die höhen- und/oder neigungsverstellbar von an Strukturteilen (8) des Fahrzeugs verankerten Seilen (38, 39, 41) getragen ist.

16. Sitzanordnung nach einem der Ansprüche 1 bis 15, **dadurch gekennzeichnet, dass** der Sitz (4) mindestens mittelbar mit Rückhaltegurten ausgestattet ist.

## Claims

1. A seat assembly for a land vehicle, sea vessel or aircraft which comprises a vertically adjustable seat (4) supporting the buttocks of a user, and a plurality of flexible connections (9-12) disposed between the seat (4) and structural parts (8) of the vehicle, the seat (4) forming at least indirectly a component of a platform (2) which can be displaced along connections in the form of cables (9 - 12) anchorable on the structural parts (8) of the vehicle and which can be positionally fixed in the respective position on the cables (9 - 12), and with those cable sections (9a - 12a, 9b - 12b) of the cables (9-12) which are located above and beneath the platform (2) running between the platform (2) and the structural parts (8) so that they either point toward or away from the vertical centreline (MA) of the platform, **characterised in that** the cables (9-12) are guided by at least one height adjustment device (13, 13a) for the platform (2), the height adjustment device (13, 13a) being incorporated into the platform (2).

2. A seat assembly according to Claim 1, **characterised in that** energy converters (22) are provided at least indirectly along the lengthwise run of the cables (9 - 12).

3. A seat assembly according to Claim 2, **characterised in that** the energy converters (22) are placed under the influence of load-reactive sensors integrated into the seat (4) or into the anchorages of the cables (9-12) on the structural parts (8).

4. A seat assembly according to Claim 1, **characterised in that** the height adjustment device (13, 13a) can be operated by hand or by means of an electric or hydraulic drive.

5. A seat assembly according to any one of Claims 2 to 4, **characterised in that** an energy converter (22) is integrated into a height adjustment device (13, 13a).

6. A seat assembly according to any one of Claims 1 to 5, **characterised in that** clamping/releasing devices (23) arranged on the platform (2) are associated with the cables (9 - 12).

7. A seat assembly according to any one of Claims 1 to 6, **characterised in that** textile back and lap tensioners (32, 33) are provided between the rear- in the direction of travel of the vehicle - cable sections (11a, 12a) that are located above the platform (2).

8. A seat assembly according to any one of Claims 1 to 6, **characterised in that** a moulding (34) shaped to match the back region of the user is provided between the rear - in the direction of travel of the vehicle - cable sections (11a, 12a) that are located above the platform (2).

9. A seat assembly according to any one of Claims 1 to 8, **characterised in that** textile lap and shoulder tensioners (35, 36) are arranged between the lateral cable sections (9a, 12a and 10a, 11 a respectively) provided above the platform (2) one after the other in the direction of travel of the vehicle.

10. A seat assembly according to Claim 9, **characterised in that** the shoulder tensioners (36) are configured in the form of nets.

11. A seat assembly according to any one of Claims 1 to 6, **characterised in that** an ergonomically designed seat (4) which can be adjusted in the direction of travel of the vehicle and locked in the desired position is provided on the platform (2).

12. A seat assembly according to Claim 11, **characterised in that** the height of the seat (4) is adjustable.

13. A seat assembly according to Claim 11 or 12, **characterised in that** the seat (4) can be adjusted side-to-side on the platform (2).

14. A seat assembly according to any one of Claims 11 to 13, **characterised in that** the rake of a backrest (6) of the seat (4) is adjustable.

15. A seat assembly according to any one of Claims 1 to 14, **characterised in that** a footrest (37, 37a) is arranged in front of the platform (2) in the direction of travel of the vehicle and is carried by cables (38, 39, 41) anchored on structural parts (8) of the vehicle so as to be adjustable for height and/or rake.

16. A seat assembly according to any one of Claims 1 to 15, **characterised in that** the seat (4) is equipped at least indirectly with restraint belts.

## Revendications

1. Agencement de siège pour un véhicule terrestre, maritime ou aérien, qui comprend un siège (4) qui reçoit le postérieur d'un utilisateur et qui est réglable verticalement, ainsi que plusieurs liaisons flexibles (9-12) agencées entre le siège (4) et des pièces structurelles (8) du véhicule, le siège (4) formant au moins indirectement une partie constitutive d'une plate-forme (2) qui est déplaçable le long d'éléments de liaison, sous la forme de câbles (9-12), capable d'être ancrée sur les pièces structurelles (8) du véhicule et qui peut être fixée en situation dans la position respective sur les câbles (9-12), dans lequel les tronçons de câbles (9a-12a, 9b-12b) des câbles (9-12) situés au-dessus et au-dessous de la plate-forme (2) s'étendent entre la plate-forme (2) et les pièces structurelles (8) de telle façon qu'ils sont dirigés soit en direction de l'axe médian vertical (MA) de la plate-forme (2) soit en éloignement de celui-ci, **caractérisé en ce que** les câbles (9-12) sont guidés via au moins un dispositif de réglage de hauteur (13, 13a) pour la plate-forme (2), le dispositif de réglage de hauteur (13, 13a) étant intégré dans la plate-forme (2).

2. Agencement de siège selon la revendication 1, **caractérisé en ce qu'**il est prévu des convertisseurs d'énergie (22), de manière au moins indirecte, dans le tracé en longueur des câbles (9-12).

3. Agencement de siège selon la revendication 2, **caractérisé en ce que** les convertisseurs d'énergie (22) sont disposés sous l'influence de capteurs qui réagissent à des charges et qui sont intégrés dans le siège (4) ou dans les points d'ancrage des câbles (9-12) sur les pièces structurelles (8).

4. Agencement de siège selon la revendication 1, **caractérisé en ce que** le dispositif de réglage en hauteur (13, 13a) est susceptible d'être actionné à la main ou bien au moyen d'un entraînement électrique ou hydraulique.

5. Agencement de siège selon l'une des revendications 2 à 4, **caractérisé en ce qu'**un convertisseur d'énergie (22) est intégré dans un dispositif de réglage en hauteur (13, 13a).

6. Agencement de siège selon l'une des revendications 1 à 5, **caractérisé en ce que** des dispositifs de serrage/desserrage (23) agencés sur la plate-forme (2) sont associés aux câbles (9-12).

7. Agencement de siège selon l'une des revendications 1 à 6, **caractérisé en ce qu'**il est prévu des éléments de tensionnement textiles (32, 33) pour le dos et pour le bassin, entre les tronçons de câble postérieurs (11a, 12a) en arrière en direction de circulation du véhicule, disposés au-dessus de la plate-forme (2).

8. Agencement de siège selon l'une des revendications 1 à 6, **caractérisé en ce qu'**il est prévu une partie conformée (34), ajustée à la partie dorsale d'un utilisateur, entre les tronçons de câble postérieurs (11a, 12a) en arrière en direction de circulation du véhicule, disposés au-dessus de la plate-forme (2).

9. Agencement de siège selon l'une des revendications 1 à 8, **caractérisé en ce que** des éléments de tensionnement textiles pour le bassin et les épaules (35, 36) sont agencés entre les tronçons de câble latéraux (9a, 12a, ou respectivement 10a, 11 a), prévus au-dessus de la plate-forme (2) et situés l'un derrière l'autre en direction de circulation du véhicule.

10. Agencement de siège selon la revendication 9, **caractérisé en ce que** les dispositifs de tensionnement d'épaule (36) sont réalisés à la manière de filets.

11. Agencement de siège selon l'une des revendications 1 à 6, **caractérisé en ce qu'**il est prévu sur la plate-forme (2) un siège de réalisation ergonomique (4) susceptible d'être déplacé sur la plate-forme (2) en direction de déplacement du véhicule et susceptible d'être immobilisé dans la position respective.

12. Agencement de siège selon la revendication 11, **caractérisé en ce que** le siège (4) est déplaçable en hauteur.

13. Agencement de siège selon la revendication 11 ou 12, **caractérisé en ce que** le siège (4) est déplaçable transversalement sur la plate-forme (2).

14. Agencement de siège selon l'une des revendications 11 ou 13, **caractérisé en ce qu'**un dossier (6) du siège (4) est réglable en inclinaison.

15. Agencement de siège selon l'une des revendications 1 à 14, **caractérisé en ce qu'**un repose-pied (37, 37a) est agencé devant la plate-forme (2) en direction de circulation du véhicule, qui est porté, avec possibilité de réglage en hauteur/ou et en inclinaison, par des câbles (38, 39, 41) ancrés à des pièces structurelles (8) du véhicule.

16. Agencement de siège selon l'une des revendications 1 à 15, **caractérisé en ce que** le siège (4) est équipé au moins indirectement avec des ceintures de retenue.
